Europäisches Patentamt

European Patent Office

Office européen des brevets

(11) Veröffentlichungsnummer: **0 221 891**
**A1**

# (12) EUROPÄISCHE PATENTANMELDUNG

(21) Anmeldenummer: 86890306.3

(22) Anmeldetag: 07.11.86

(51) Int. Cl.⁴: **A 01 B 63/111**
**A 01 B 33/08**

(30) Priorität: 08.11.85 AT 3258/85

(43) Veröffentlichungstag der Anmeldung:
13.05.87 Patentblatt 87/20

(84) Benannte Vertragsstaaten:
AT CH DE FR IT LI SE

(71) Anmelder: Bombardier-Rotax-Wien Produktions- und
Vertriebsgesellschaft m.b.H.
Donaufelder Strasse 73-79
A-1210 Wien(AT)

(72) Erfinder: Ranner, Dietrich, Dipl.-Ing.
Schwaighofen-Egg
A-5301 Eugendorf Salzburg(AT)

(74) Vertreter: Krause, Ernst, Dipl.-Ing. et al,
Dipl.- Ing. Krause, Ernst Dipl. Ing. Casati, Wilhelm
Patentanwälte Amerlingstrasse 8
A-1061 Wien(AT)

(54) Verfahren zur Steuerung der Eindringtiefe von Bodenbearbeitungsgeräten, Steueranordnung zu dessen Durchführung und Bodenbearbeitungsgerät.

(57) Die Erfindung betrifft ein Verfahren zur selbsttätigen Steuerung der Eindringtiefe von hydraulisch angetriebenen Bodenbearbeitungsgeräten, z.B. Bodenfräsen, auf eine Steueranordnung zur Durchführung des Verfahrens und auf ein mit der Steueranordnung versehenes Bodenbearbeitungsgerät. Zwecks Automatisierung der Einstellung der Eindringtiefe wird der für den Antrieb des Bodenbearbeitungsgerätes erforderliche Druck des hydraulischen Antriebes als Regelgröße für die Steuerung der Eindringtiefe herangezogen. Dabei ist in der Druckleitung 4 für den hydraulischen Motor 25 des Werkzeuges 15 des Bodenbearbeitungsgerätes 3 eine Abzweigung für eine zu dem Regelkreis führende Hydraulikleitung 5 vorgesehen, die mit mindestens einer hydraulischen Kolben-Zylinder-Einheit 6 im Sinne eines Anhebens des Bodenbearbeitungsgerätes 3 leitend verbunden ist.

EP 0 221 891 A1

Fig. 1

Verfahren zur Steuerung der Eindringtiefe von Bodenbearbeitungsgeräten, Steueranordnung zu dessen Durchführung und Bodenbearbeitungsgerät

Die Erfindung bezieht sich auf ein Verfahren zur selbsttätigen Steuerung der Eindringtiefe von hydraulisch angetriebenen Bodenbearbeitungsgeräten, z.B. Bodenfräsen, auf eine Steueranordnung zur Durchführung des Verfahrens und auf ein mit der Steueranordnung versehenes Bodenbearbeitunsgerät.

Bisher ist es üblich, daß der die Fräse bedienende Fahrer entweder die Fräse selbst oder ein Manometer beobachtet, welches den Druck in der Hochdruckleitung des Hydrauliksystems anzeigt. Steigt der Druck zu hoch an, so bedeutet dies, daß die Fräse zu tief in den Untergrund eingedrungen ist und der Fahrer hebt sie über hydraulische Stellzylinder wieder etwas an, bis sich der normale gewünschte Betriebsdruck wieder eingestellt hat.

Der Erfindung liegt die Aufgabe zugrunde, die bisher nur von Hand aus mögliche Einstellung der Eindringtiefe des Bodenbearbeitungsgerätes auf einfache Weise zu automatisieren.

Dies wird mit Hilfe des erfindungsgemäßen Verfahrens dadurch erreicht, daß der für den Antrieb des Bodenbearbeitungsgerätes erforderliche Druck des hydraulischen Antriebes als Regelgröße für die Steuerung der Eindringtiefe herangezogen wird. Dadurch wird die durch Schwankungen des durch den Boden auf das Bodenbearbeitungsgerät ausgeübten Widerstandes bewirkte Änderung des hydraulischen Betriebsdruckes des Antriebsmotors des Bodenbearbeitungsgerätes für die selbsttätige Steuerung der Eindringtiefe der Fräse ausgenützt, wodurch keine externen Mittel zur Lieferung einer entsprechenden Regelgröße benötigt werden. Dabei kann der Druck des hydraulischen Antriebsfluids vor Heranziehung als Regelgröße gedrosselt werden, wodurch die Ansprechgröße eingestellt werden kann.

Bei einer erfindungsgemäßen Steueranordnung zur Durchführung des erfindungsgemäßen Verfahrens ist in der Druckleitung für den hydraulischen Motor des Werkzeuges des Bodenbearbeitungsgerätes eine Abzweigung für eine zu dem Regelkreis führende Hydraulikleitung vorgesehen, die mit mindestens einer hydraulischen Kolben-Zylinder- Einheit im Sinne eines Anhebens des Bodenbearbeitungsgerätes leitend verbunden ist. Dadurch werden die Änderungen des hydraulischen Betriebsdruckes direkt für die Höhenverstellung des Bodenbearbeitungsgerätes ausgenützt. Dabei kann zur Steuerung der Ansprechgröße in der Hydraulikleitung ein Drosselventil eingebaut sein. Das Drosselventil verhindert hiebei, daß plötzliche, kurzzeitige Drucksteigerungen auf die Kolben/Zylindereinheit durchschlagen und ein Flattern des Bodenbearbeitungsgerätes verursachen. Um unter allen Umständen ein zuverlässiges Eindringen des Bodenbearbeitungsgerätes in den Boden zu erzielen, können der bzw. die Hydraulik- Zylinder-Einheiten im Sinne des Absenkens des Bodenbearbeitungsgerätes über das Eigengewicht des Gerätes hinausgehend vorgespannt sein. Dabei kann die Vorspannung mittels eines hydraulischen Blasenspeichers erfolgen. Es kann jedoch die Vorspannung mittels einer Druckfeder erfolgen.

Bei einem Bodenbearbeitungsgerät, insbesondere Bodenfräse, mit einem hydraulisch angetriebenen, rotierenden Werkzeug ist erfindungsgemäß zur Steuerung der Eindringtiefe des Bodearbeitungswerkzeuges an die Antriebsleitung eine weitere Hydraulikleitung angeschlossen, welche mit wenigstens einer hydraulischen Kolben-Zylinder-Einheit im Sinne eines Anhebens des Werkzeuges des Bodenbearbeitungsgerätes verbunden ist. Dadurch wirkt sich jede Erhöhung des Betriebsdruckes dahingehend aus, daß das Werkzeug anzuheben versucht wird, wobei dann, wenn der Druck ausreicht, um zumindest das Eigengewicht des Bodenbearbeitungsgerätes zu überwinden, ein Anheben des Gerätes erfolgt, wobei dieses Anheben selbsttätig nur so weit vor sich geht, bis der Arbeitswiderstand und damit der Betriebsdruck des hydraulischen Antriebsmotors absinkt, wodurch dann die Beaufschlagung der Hydraulikzylinder abfällt und sich das Gerät damit wieder tiefer in den Boden absenkt.

Vorteilhafterweise kann sich der bzw. die hydraulischen Kolben- Zylinder-Einheiten mit ihrem einen Ende am Tragarm für das Bodenbearbeitungsgerät und mit ihrem anderen Ende gegen den Boden abstützen, wodurch die Höhenverstellung ohne Belastung der Kupplung an das Zugfahrzeug erfolgt. Dabei kann die Abstützung gegen den Boden über einen Schwenkhebel, einen hydraulischen Einstellzylinder od.dgl. und ein Glättbrett erfolgen, wodurch auf Grund der Voreinstellung über den Einstellzylinder die Wirkung der Hydraulikzylinder unmittelbar eintritt. Schließlich kann der Tragarm für das Bodenbearbeitungsgerät als um dieselbe Achse wie der Schwenkhebel verschwenkbarer Hebel ausgebildet sein, wobei die hydraulischen Kolben-Zylinder-Einheiten zwischen den beiden Hebeln angreifen, wobei die Achse am Tragrahmen für das Werkzeug gehaltert ist. Dadurch wird auf Grund der Hebelwirkung erreicht, daß eine entsprechend feine Ansprechung des Anhebe- bzw. Absenkvorganges erzielt ist.

In der Zeichnung ist ein Ausführungsbeispiel des Erfindungsgegenstandes dargestellt.

Fig. 1 zeigt einen hydraulischen Schaltplan der erfindungsgemäßen Steueranordnung.

Fig. 2 ist eine schematische Seitenansicht des erfindungsgemäßen Bodenbearbeitungsgerätes.

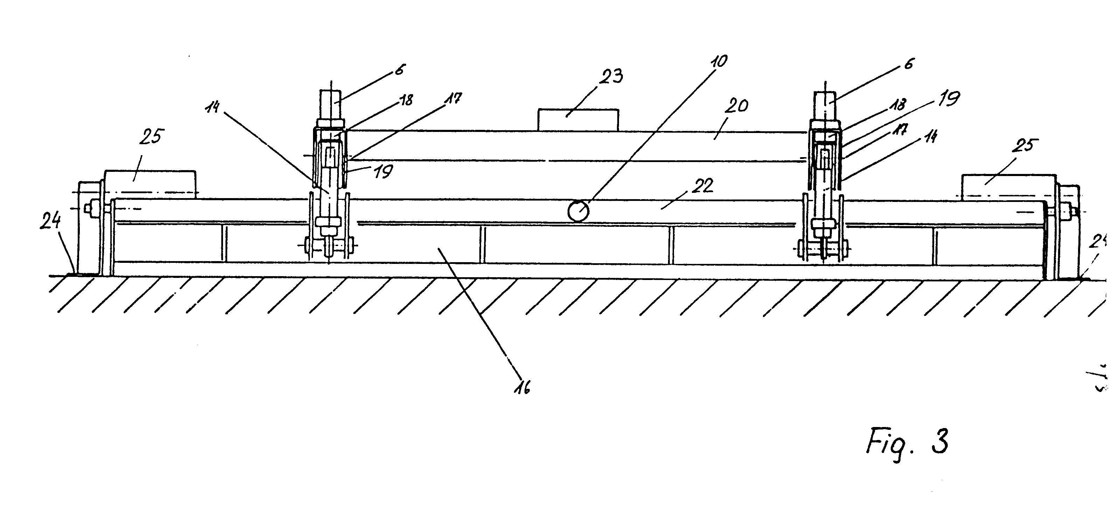

Fig. 3 gibt eine Rückansicht des Gerätes wieder.

Das vorliegend als Bodenfräse, die auch als Pistenbearbeitungsgerät eingesetzt werden kann, ausgebildete Bodenbearbeitungsgerät weist einen im wesentlichen horizontalen und quer zur Vorschubrichtung verlaufenden Tragarm 20 auf, über den die Bodenfräse am Zugfahrzeug mittels einer Zugstange 23 angehängt ist, welche am Zugfahrzeug um eine im wesentlichen horizontale Achse schwenkbar gelagert ist. Der Tragarm 20 ist beidseits mit je einem Schwenkhebel 19 fest verbunden, welche Schwenkhebel über je eine koaxial zueinander verlaufende Schwenkachse 21 mit einem zweiten Schwenkhebel 17 verbunden sind. Die Schwenkachse 21 ist am Tragrahmen 22 für das Werkzeug 15 des Bodenbearbeitungsgerätes 3 gehaltert. Am Schwenkhebel 17 greift, in Vorschubrichtung des Bodenbearbeitungsgerätes hinter der Schwenkachse 21 liegend, ein teleskopartig verstellbares Organ, vorliegend eine hydraulische Kolben-Zylinder-Einheit 14, an welches sich mit seinem anderen Ende an einem in Vorschubrichtung hinter dem Werkzeug 15 angeordneten Glättbrett 16 abstützt. Das Glättbrett 16 liegt mit seinem mit A bezeichneten Bereich an der bearbeiteten Bodenfläche an.

Zwischen den freien Enden der beiden Schwenkhebel 17 und 19 ist ein Gummipuffer 18 angeordnet, welcher bei Normalgebrauch die gegenseitige Entfernung der freien Enden der beiden Schwenhebel 17, 19 bestimmt. Zwischen den beiden Schwenkhebeln ist weiters eine hydraulische Kolben-Zylinder-Einheit 6 vorgesehen, mittels welcher der Gummipuffer 18 von seiner Anlage am Hebel 19 wegbewegbar ist. Dazu ist die hydraulische Kolben-Zylinder-Einheit 6 mit ihrem Zylinder am Hebel 19 befestigt und greift mit der Kolbenstange durch den Hebel 19 hindurch und stützt sich am Gummipuffer 18 ab.

Das Bodenbearbeitungsgerät 3 stützt sich mit beidseits angeordneten Gleitschuhen 24 am Boden ab. Mit 25 ist der hydraulische Antriebsmotor für das Werkzeug 15 des Bodenbearbeitungsgerätes 3 bezeichnet.

Der Antriebsmotor 25 des Werkzeuges 15 wird über eine Druckleitung 4 mit dem Betriebsdruck beaufschlagt, welcher von einer durch einen Motor 1 angetriebenen Pumpe 2 erzeugt wird. Von der Druckleitung 4 zweigt eine Hydraulikleitung 5 ab, welche zu dem Regelkreis für die Steuerung der Eindringtiefe des Werkzeuges 15 in den Boden führt. Der Regelkreis besteht aus einer Druckleitung 26, welche von der Hydraulikleitung 5 ausgeht und die zwei hydraulischen Kolben-Zylinder-Einheiten 6 im Sinne eines Anhebens des Bodenbearbeitungswerkzeuges 15 beaufschlagt. Die hydraulischen Kolben-Zylinder-Einheiten 6 sind sowohl durch das Eigengewicht des Bodenbearbeitungsgerätes 3 als auch durch einen Gegendruck vorgespannt. Diese Vorspannung kann dabei entweder durch einen hydraulischen Blasenspeicher 10, der über Leitungen 12 mit den hydraulischen Kolben-Zylinder-Einheiten 6 verbunden ist, aufgebracht werden, oder es ist an der Rückseite des Kolbens der hydraulischen Kolben-Zylinder-Einheit 6 eine Feder 8 vorgesehen, deren Spannung durch eine Stellschraube 9 vorgewählt werden kann. In der Hydraulikleitung 5 ist ein Drosselventil 7 angeordnet. In die vom Blasenspeicher 10 kommenden Druckleitung 12 ist ein Rückschlagventil eingebaut, über welches verlorengegangenes Hydrauliköl (Lecköl) der Kolbenstangenseite durch frisches Öl aus einem Tank 13 ersetzt werden kann.

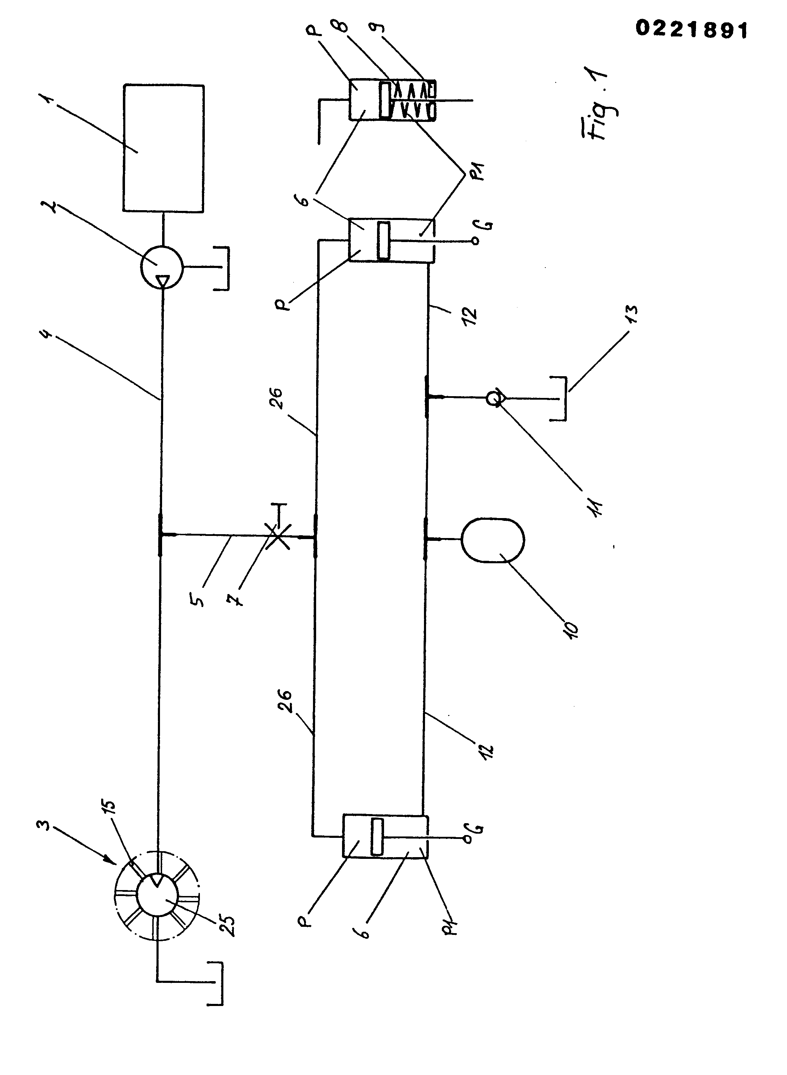

Bei Betrieb der Vorrichtung treibt der Dieselmotor 1 die Pumpe 2 an, welche über die Druckleitung 4 den Antriebsmotor 25 des Werkzeuges 15 antreibt. Dabei wird in der Leitung 4 ein dem Widerstand des Werkzeuges 15 im Boden entsprechender Druck aufgebaut, welcher sich über die Hydraulikleitung 5 und die Leitungen 26 auf die beiden hydraulischen Kolben-Zylinder-Einheiten 6 fortpflanzt. Dieser Druck ist in Fig. 1 mit P bezeichnet. Diesem Druck P steht der Druck P1 auf der gegenüberliegenden Kolbenseite entgegen, der einerseits durch das Gewicht des Bodenbearbeitungsgerätes 3 und anderseits durch die entweder durch den Blasenspeicher 10 oder die Feder 8 bewirkte Vorspannung erzeugt ist.

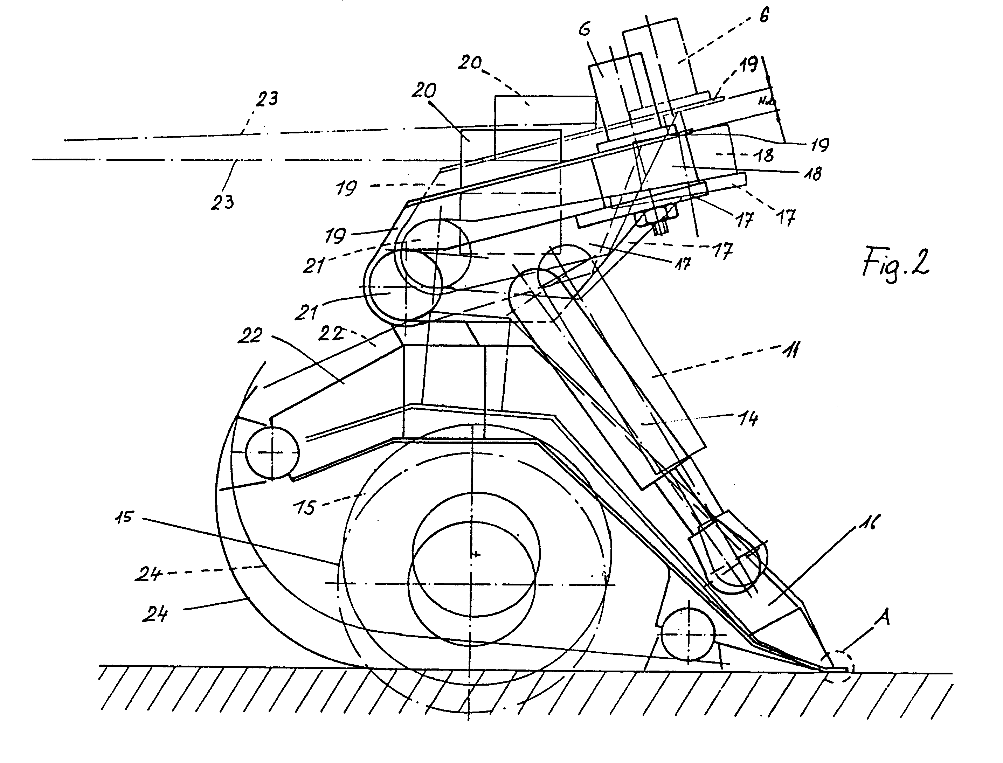

Die gewünschte Einstelltiefe wird zunächst über die hydraulische Kolben-Zylinder-Einheit 14 durch den Fahrer von Hand aus eingestellt. Ist nun die Fräse im Betrieb zu tief in den Grund eingedrungen, steigt der Betriebsdruck in der Leitung 4 und damit über die Leitungen 5 und 26 auch auf der Kolbenbodenseite der hydraulischen Kolben-Zylinder-Einheit 6 an. Diesem Druck wirkt das Gewicht der Fräse sowie die Vorspannung P1 entgegen. Steigt nun der Druck P aufgrund des erhöhten Widerstandes des Werkzeuges 15 im Boden weiter an, so erhöht sich der Druck P über jenen Wert, der durch P1 und G (Gewicht des Bodenbearbeitungsgerätes) aufgebracht ist, und der Kolben der hydraulischen Kolben-Zylinder-einheit 6 bewegt sich im Sinne des Anhebens des Bodenbearbeitungsgerätes. Dabei drückt die Kolbenstange der hydraulischen Kolben-Zylinder-Einheit 6 auf den Gummipuffer 18 und ver schwenkt dabei die Schwenkhebel 17 und 19 im Sinne einer Auseinanderbewegung der freien Enden der beiden Schwenhebel 17, 19. Da die Schwenkhebel 17 über die hydraulische Kolben-Zylinder-Einheit 14 und über das Glättbrett 16 im Bereich A gegen den Boden abgestützt ist, weicht der Hebel 19 nach oben aus. Dadurch wird die Schwenkachse 21 entlang eines Kreisbogens, dessen Mittelpunkt im Punkt A, also dem Aufstützpunkt des Glättbrettes 16 am Boden, nach oben bewegt. In Fig. 2 ist die angehobene Stellung mit dünneren Linien wiedergegeben, wobei in dieser Stellung die zu den

Bezugzeichen führenden Linien strichliert sind. Da die Achse 21 mit dem Tragrahmen 22 des Werkzeuges 15 fest verbunden ist. wird damit das Werkzeug 15 angehoben, also die Eindringtiefe verringert. Damit sinkt der dem Werkzeug 15 entgegengesetzte Widerstand und in weiterer Folge damit auch der Betriebsdruck in der Druckleitung 4. Dieses Absenken des Betriebsdruckes führt zu einem Absinken des Druckes P in der hydraulischen Kolben-Zylinder-Einheit 6, wodurch aufgrund des Eigengewichtes des Bodenbearbeitungsgerätes unD der Vorspannung durch den Blasenspeicher 10 bzw. die Feder 8 die Kolbenstange der hydraulischen Kolben-Zylinder-Einheit 6 wieder eingefahren werden kann, u. zw. soweit, bis der Gummipuffer 18 wieder am Hebel 19 anliegt.

Die Erfindung nutzt also die Abhängigkeit des hydraulischen Betriebsdruckes des Antriebsmotors 25 von der Eindringtiefe zur Selbstregulierung des Bodenbearbeitungsgerätes aus. Es entsteht ein Zustand, bei dem das Werkzeug 15 entsprechend der Härte des Untergrundes eine mittlere Eindringtiefe erreicht, um den die tatsächlichen Eindringtiefen leicht schwanken. Die gewünschte Eindringtiefe, bzw. der gewünschte Betriebsdruck des Antriebsmotors 25 läßt sich durch entsprechende Vorspannung der Federn 8 oder des Blasenspeicher 10 einstellen. Die Empfindlichkeit (Reaktionsgeschwindigkeit) kann durch die Drossel 7 in den Druckleitungen 5, 26 eingestellt werden.

Patentansprüche:

1. Verfahren zur selbsttätigen Steuerung der Eindringtiefe von hydraulisch angetriebenen Bodenbearbeitungsgeräten, z.B. Bodenfräsen, dadurch gekennzeichnet, daß der für den Antrieb des Bodenbearbeitungsgerätes erforderliche Druck des hydraulischen Antriebes als Regelgröße für die Steuerung der Eindringtiefe herangezogen wird.

2. Verfahren nach Anspruch 1, dadurch gekennzeichnet, daß der Druck des hydraulischen Antriebsfluids vor Heranziehung als Regelgröße gedrosselt wird.

3. Steueranordnung zur Durchführung des Verfahrens nach Anspruch 1, dadurch gekennzeichnet, daß in der Druckleitung (4) für den hydraulischen Motor (25) des Werkzeuges (15) des Bodenbearbeitungsgerätes (3) eine Abzweigung für eine zu dem Regelkreis führende Hydraulikleitung (5) vorgesehen ist, die mit mindestens einer hydraulischen Kolben-Zylinder-Einheit (6) im Sinne eines Anhebens des Bodenbearbeitungsgerätes (3) leitend verbunden ist.

4. Anordnung nach Anspruch 3, dadurch gekennzeichnet, daß in der Hydraulikleitung (5) ein Drosselventil (7) eingebaut ist.

5. Anordnung nach Anspruch 3 oder 4, dadurch gekennzeichnet, daß der bzw. die hydraulischen Kolben-Zylinder-Einheiten (6) im Sinne des Absenkens des Bodenbearbeitungsgerätes (3) über das Eigengewicht des Gerätes hinausgehend vorgespannt sind.

6. Anordnung nach Anspruch 5, dadurch gekennzeichnet, daß die Vorspannung mittels eines hydraulischen Blasenspeichers (10) erfolgt.

7. Anordnung nach Anspruch 5, dadurch gekennzeichnet, daß die Vorspannung mittels einer Druckfeder (8) erfolgt.

8. Bodenbearbeitungsgerät, insbesondere Bodenfräse, mit hydraulisch angetriebenem, rotierendem Werkzeug, dadurch gekennzeichnet, daß zur Steuerung der Eindringtiefe des Bodenbearbeitungswerkzeuges (15) an die Antriebsleitung (4) eine weitere Hydraulikleitung (5) angeschlossen ist, welche mit wenigstens einer hydraulischen Kolben- Zylinder-Einheit (6) im Sinne eines Anhebens des Werkzeuges (15) des Bodenbearbeitungsgerätes (3) verbunden ist.

9. Gerät nach Anspruch 8, dadurch gekennzeichnet, daß sich der bzw. die hydraulischen Kolben-Zylinder-Einheiten (6) mit ihrem einen Ende am Tragarm (20) für das Bodenbearbeitungsgerät (3) und mit ihrem anderen Ende gegen den Boden abstützt.

10. Gerät nach Anspruch 8 oder 9, dadurch gekennzeichnet, daß die Abstützung gegen den Boden über einen Schwenkhebel (17), einen hydraulischen Einstellzylinder (14) od.dgl. und ein Glättbrett (16) erfolgt.

11. Gerät nach Anspruch 9 oder 10, dadurch gekennzeichnet, daß der Tragarm (20) für das Bodenbearbeitungsgerat (3) als um dieselbe Achse (21) wie der Schwenkhebel (17) verschwenkbarer Hebel (19) ausgebildet ist, wobei die hydraulischen Kolben-Zylinder-Einheiten (6) zwischen den beiden Hebeln (17, 19) angreifen, wobei die Achse (21) am Tragrahmen (22) für das Werkzeug (15) gehaltert ist.

0221891

Fig.1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-1 376 185 (INTERNATIONAL HARVESTER COMPANY) * Das ganze Dokument * | 1 | A 01 B 63/111 A 01 B 33/08 |
| A | | 3,7 | |
| X | DE-B-1 099 775 (STEYR-DAIMLER PUCH AG) * Spalte 5, Zeilen 22-38; Figur 2 * | 1 | |
| A | | 3,7 | |
| X | FR-A-2 323 933 (DEERE & CO.) * Seite 3, Zeile 8 - Seite 6, Zeile 35; Figur 2 * | 1 | |
| A | | 3,7 | RECHERCHIERTE SACHGEBIETE (Int Cl 4) A 01 B |
| X | FR-A-1 340 758 (GESELLSCHAFT FÜR LINDE'S EISMASCHINEN AG) * Das ganze Dokument * | 1 | |
| A | FR-A-1 524 399 (DAVID BROWN GEAR INDUSTRIES LIMITED) | | |

Der vorliegende Recherchenbericht wurde für alle Patentansprüche erstellt.

| Recherchenort DEN HAAG | Abschlußdatum der Recherche 19-01-1987 | Prüfer VERDOODT S.J.M. |
|---|---|---|